# DEMANDE DE BREVET EUROPEEN

(11) **EP 0 898 439 A1**
(43) Date de publication de la demande: **24.02.1999**
(21) Numéro de dépôt: 98402067.7
(22) Date de dépôt: 17.08.1998
(51) Int. Cl.: H04Q 7/38, H04Q 7/22

(54) **Procédé de diffusion d'une notification urgente à destination d'une pluralité de stations mobiles en mode veille**

(30) Priorité: 18.08.1997 FR 9710443
(71) Demandeur: ALCATEL, 75008 Paris (FR)
(72) Inventeur: Roberts, Michael, 92200 Neuilly Sur Seine (FR)
(74) Mandataire: El Manouni, Josiane

(57) **Abrégé**

L'invention concerne un procédé de diffusion d'une notification urgente à destination d'une pluralité de stations mobiles en mode veille, dans un système de radiocommunication du type mettant en oeuvre notamment : un canal de messagerie (PCH), permettant la diffusion de messages vers ladite pluralité de stations mobiles, et un canal de notification (NCH), permettant la diffusion de notifications vers ladite pluralité de stations mobiles. Chaque station mobile écoute des messages successifs sur le canal de messagerie et passant à l'écoute du canal de notification lorsqu'elle sait qu'une nouvelle notification est émise sur le canal de notification, chaque message comprenant notamment, à cet effet, une indication de l'arrivée d'une nouvelle notification sur ledit canal de notification.

Selon l'invention, ladite notification urgente est envoyée (30) au moins une fois, sous forme de message, directement sur ledit canal de messagerie, de façon que le message suivant reçu par chaque station mobile soit ladite notification urgente.

## Description

Le domaine de l'invention est celui des systèmes de radiocommunication avec des mobiles, et notamment, mais non exclusivement, ceux du type numérique cellulaire conçus selon les standards de radiotélécommunication publics GSM et PCS.

Par standard GSM, on entend ici aussi bien le standard GSM 900 ("Groupe Spécial systèmes Mobiles publics de radiocommunication fonctionnant dans la bande des 900 MHz") que le standard DCS 1800 ("Digital Cellular System" fonctionnant dans la bande des 1800 MHz).

Plus précisément, l'invention concerne un procédé de diffusion d'une notification urgente à destination d'une pluralité de stations mobiles en mode veille.

La description qui va suivre reprend les termes couramment utilisés dans la terminologie GSM. Pour plus d'informations, on peut se référer à la revue "Digital Cellular Mobile Communication Seminar" du séminaire tenu à ce sujet du 16 au 18 octobre 1990 à Nice.

D'une façon générale, un système de radiocommunication numérique cellulaire est mis en oeuvre au sein d'un réseau de cellules géographiques parcouru par des stations mobiles. Une station de base (ou BTS, pour "Base Transceiver Station" en anglais) est associée à chaque cellule et utilise en général plusieurs porteuses. Une station mobile communique par l'intermédiaire de sa BTS courante, c'est-à-dire de la BTS associée à la cellule dans laquelle elle se trouve.

De façon classique, chaque porteuse est segmentée de manière temporelle en utilisant un schéma fixe de multiplexage à répartition dans le temps (AMRT). Selon ce schéma, l'axe temporel est divisé en trames successives de durée fixe. Chacune des trames est elle-même divisée en un nombre déterminé d'intervalles de temps. La récurrence d'un intervalle de temps particulier dans chaque trame constitue un canal physique sur lequel peuvent être multiplexés plusieurs canaux logiques. En d'autres termes, les intervalles de temps d'un canal physique sont répartis entre différents canaux logiques, et donnent naissance à une nouvelle structure, appelée multitrame.

Dans le standard GSM, deux structures de mutlitrames ont été définies. L'une, dite multitrame TCH/SACCH, est constituée de 26 trames, pour les canaux de trafic (TCH, pour "Traffic CHannel" en anglais) et de contrôle associés lents (SACCH, pour "Slow Associated Control CHannel" en anglais). L'autre, dite multitrame BCCH/CCCH, est constituée de 51 trames, uniquement pour des canaux de contrôle, à savoir le canal de contrôle diffusé (BCCH, pour "Common Control CHannel" en anglais), le canal de contrôle commun (CCCH, pour "Broadcast Control CHannel" en anglais), le canal de synchronisation (SCH, pour "Synchronization CHannel" en anglais) et le canal de correction des fréquences (FCH, pour "Frequency CHannel" en anglais).

Contrairement à la multitrame TCH/SACCH, propre à une station mobile, voire à deux en cas de demi-débit, la multitrame BCCH/CCCH est partagée entre toutes les stations mobiles présentes dans une cellule. C'est pourquoi tous les canaux logiques transmis dans cette structure sont des canaux simplex (un seul sens de transmission).

Le canal physique supportant la multitrame BCCH/CCCH est constitué par la récurrence du premier intervalle de temps ("time slot 0") d'une porteuse particulière, dite porteuse BCCH.

Dans le cadre de la présente invention, on s'intéresse uniquement à la voie descendante de la multitrame BCCH/CCCH (diffusion de la station de base vers les stations mobiles). Sur cette voie descendante, 50 des 51 trames sont groupées en cinq ensembles de dix trames, la dernière trame restant inoccupée. Chacun des cinq ensembles commence avec une trame pour le canal FCH suivie d'une trame pour le canal SCH, les huit trames restantes formant deux blocs de quatre. Au total, on dispose donc de huit blocs de quatre trames, répartis comme suit : le premier bloc du premier ensemble est pour le canal BCCH tandis que les neuf autres blocs, appelés blocs de "paging", sont pour le canal CCCH.

Dans le standard "GSM phase 1", le canal CCCH est lui-même constitué des deux canaux suivants: le canal de messagerie (PCH, pour "Paging CHannel" en anglais) et le canal d'allocation de ressources (AGCH, pour "Access Grant CHannel" en anglais). Les canaux PCH et AGCH ne sont jamais transmis simultanément vers une même station mobile. Les neuf blocs de "paging" sont par exemple répartis comme suit : quatre blocs pour le canal AGCH et cinq blocs pour le canal PCH.

Chaque station mobile écoute le canal AGCH uniquement lorsqu'il a préalablement demandé, via le canal d'accès aléatoire (RACH, pour "Random Access CHannel" en anglais), une allocation de ressources dédiées. Ceci est le cas à la mise en route ou lorsqu'une communication doit être établie.

En revanche, en mode veille, afin d'économiser sa batterie, chaque station mobile est assignée à l'un des blocs de "paging" affectés au canal PCH et n'a donc pas à écouter tout le canal PCH (réception discontinue ou DRX). Chaque bloc de "paging" peut supporter plusieurs stations mobiles. La station mobile et le réseau déterminent le bloc de "paging" propre à la station mobile à partir des données issues du réseau et de l'identité de la station mobile.

Dans le standard "GSM phase 2", avec l'introduction des services VHS/VGCS ("Voice Broadcast Service" et "Voice Group Call Service" respectivement en anglais), basés sur l'utilisation des appels de groupe (ou "Group Calls" en anglais), un nouveau canal a été défini. Il s'agit du canal de notification (ou NCH, pour Notification CHannel" en anglais). Ce canal NCH peut être placé n'importe où dans le canal AGCH, mais en aucun cas dans le canal PCH, de façon à ne pas détruire la possibilité de faire parvenir des messages ("pagability" en anglais) aux populations actuelles de stations mobiles. Par exemple, si le canal AGCH dispose de quatre blocs, deux peuvent être réaffectés au canal NCH.

Pour recevoir des appels de groupe, une station mobile doit lire les notifications du canal PCH. S'il n'y a pas de messages AGCH, les notifications sont envoyées de façon continue sur le canal NCH. Elles sont répétées selon une séquence prédéterminée quelconque. Chaque nouvelle notification est placée dans la séquence. En outre, la première notification de la séquence est repérée par un paramètre généralement appelé "numéro de liste de notifications" (ou NLN, pour Notification List Number" en anglais). Ce paramètre NLN, qui est modifié par le réseau dès qu'une nouvelle notification est ajoutée à la séquence, est transmis à la fin de chaque message du canal PCH.

L'écoute des canaux PCH et NCH par une station mobile en mode veille peut être résumée de la façon suivante : lorsqu'elle écoute le canal PCH, la station mobile lit les messages et compare le paramètre NLN de chaque message à un paramètre NLN préalablement stocké. Tant qu'il n'y a pas de changement du paramètre NLN, elle continue à écouter le canal PCH. En revanche, dès qu'elle détecte un changement, elle arrête d'écouter le canal PCH pour écouter le canal NCH. Elle lit alors successivement toutes les notifications de la séquence émise sur le canal NCH, puis stocke le nouveau paramètre NLN à la place du précédent, et enfin recommence à lire le canal PCH, en comparant à nouveau le paramètre NLN de chaque message au paramètre NLN nouvellement stocké.

Si cette technique actuelle d'écoute des canaux PCH et NCH est satisfaisante dans la plupart des cas, elle présente un inconvénient majeur, à savoir sa lenteur, lorsque l'on souhaite diffuser une notification de façon urgente.

En effet, avant de pouvoir lire cette notification urgente, la station mobile doit lire le paramètre NLN dans un message du canal PCH, détecter qu'il a changé, puis lire une ou plusieurs notifications de la séquence avant d'arriver à la notification concernée. En d'autres termes, il s'écoule un temps trop long (quelques secondes en général) avant que la station mobile lise la notification alors que celle-ci est urgente. Par conséquent, la station mobile ne peut pas répondre suffisament rapidement à cette notification urgente.

L'invention a notamment pour objectif de pallier cet inconvénient majeur de l'état de la technique.

Plus précisément, l'un des objectifs de la présente invention est de fournir un procédé de diffusion d'une notification urgente à destination d'une pluralité de stations mobiles en mode veille, permettant à chaque station mobile de lire très rapidement cette notification urgente. En d'autres termes, il s'agit de réduire l'intervalle de temps entre l'émission par le réseau d'une notification urgente et la lecture de cette notification urgente par la station mobile.

L'invention a également pour objectif de fournir un tel procédé permettant à une station mobile, bien qu'entrée en mode veille après l'instant d'émission de cette notification urgente, d'en prendre également connaissance.

Un autre objectif de l'invention est de fournir un tel procédé qui soit simple à mettre en oeuvre et peu coûteux.

Ces différents objectifs, ainsi que d'autres qui apparaîtront par la suite, sont atteints selon l'invention à l'aide d'un procédé de diffusion d'une notification urgente à destination d'une pluralité de stations mobiles en mode veille, dans un système de radiocommunication du type mettant en oeuvre notamment : un canal de messagerie (PCH), permettant la diffusion de messages vers ladite pluralité de stations mobiles, et un canal de notification (NCH), permettant la diffusion de notifications vers ladite pluralité de stations mobiles,

chaque station mobile écoutant des messages successifs sur le canal de messagerie et passant à l'écoute du canal de notification lorsqu'elle sait qu'une nouvelle notification
est émise sur le canal de notification, chaque message comprenant notamment, à cet effet, une indication de l'arrivée d'une nouvelle notification sur ledit canal de notification,

procédé dans lequel ladite notification urgente est envoyée au moins une fois, sous forme de message, directement sur ledit canal de messagerie, de façon que le message suivant reçu par chaque station mobile soit ladite notification urgente.

Le principe général de l'invention consiste donc à envoyer la notification urgente non pas sur le canal NCH, comme c'est le cas actuellement, mais directement sur le canal PCH (et donc sous forme de message).

De cette façon, l'intervalle de temps entre l'émission par le réseau d'une notification urgente et la lecture de cette notification urgente par la station mobile est très court puisqu'égal à l'intervalle de temps entre deux messages successifs.

Il est clair que la présente invention permet à la station mobile d'accéder à une notification urgente beaucoup plus rapidement que la technique actuelle précitée, puisque la station mobile n'a pas à lire le paramètre NLN dans un message (du canal PCH), ni à détecter que ce paramètre a changé, ni enfin à lire une ou plusieurs notifications de la séquence émise sur le canal NCH avant d'arriver à la notification urgente concernée.

Il est à noter que la notification urgente peut éventuellement être envoyée plusieurs fois successivement sur le canal PCH. Ceci vise à permettre à des stations mobiles, entrées en mode veille après l'instant de la première émission de cette notification urgente, de pouvoir néanmoins la recevoir.

Préférentiellement, lorsque ledit canal de messagerie dispose d'un nombre prédéterminé de blocs de "paging" parmi la totalité des blocs de "paging" de la voie descendante d'une multitrame BCCH/CCCH, alors ladite notification urgente est envoyée, sous forme de message, directement dans chacun desdits blocs de "paging" dont dispose ledit canal de messagerie.

Ainsi, toutes les stations mobiles en mode veille, quel que soit le bloc de "paging" qui leur est assigné, reçoivent la notification urgente dès que celle-ci est émise.

De façon avantageuse, ladite notification urgente est également envoyée sur ledit canal de notification.

De cette façon, une station mobile qui entre en mode veille après l'émission de la notification urgente sur le canal PCH peut néanmoins recevoir cette notification urgente. On notera cependant que, dans ce cas, la station mobile lit la notification urgente selon le mécanisme de l'art antérieur (c'est-à-dire passe du canal PCH au canal NCH, puis lit la séquence de notifications envoyée sur la canal NCH). Elle ne bénéficie donc pas des avantages de rapidité liés à la présente invention.

Préférentiellement, ledit système de radiocommunication est un système de radiocommunication numérique cellulaire de type GSM.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un organigramme simplifié du procédé selon l'art antérieur de diffusion d'une notification (normale ou urgente) ;
- la figure 2 présente un organigramme simplifié du procédé selon l'art antérieur de lecture par une station mobile d'une notification (normale ou urgente) ;
- la figure 3 présente un organigramme simplifié du procédé selon l'invention de diffusion d'une notification urgente ; et
- la figure 4 présente un organigramme simplifié du procédé selon l'invention de lecture par une station mobile d'une notification urgente.

L'invention concerne donc un procédé de diffusion d'une notification urgente dans un système de radiocommunication du type mettant en oeuvre notamment un canal de messagerie (PCH) et un canal de notification (NCH).

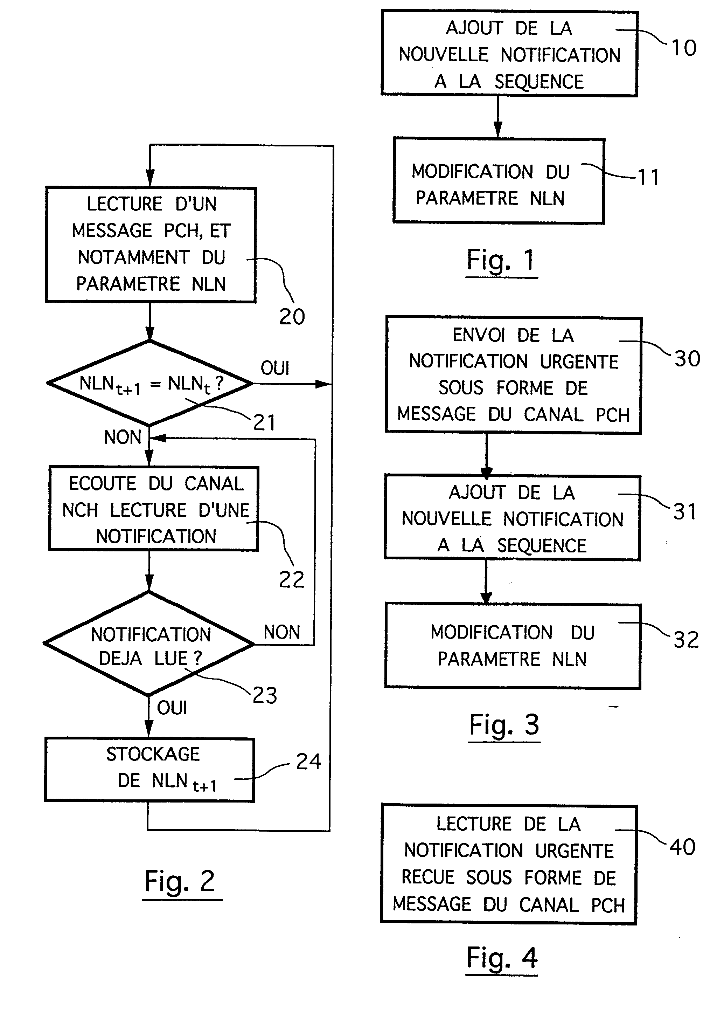

On rappelle tout d'abord, en relation avec les figures 1 et 2 respectivement, les procédés de l'art antérieur de diffusion d'une notification et de lecture par une station mobile d'une notification.

Il est important de noter que dans l'art antérieur, on ne fait aucune distinction entre une notification "normale" et une notification "urgente".

Dans l'art antérieur, le procédé de diffusion d'une notification (normale ou urgente) comprend les étapes suivantes (cf fig.1):
- on ajoute (10) la nouvelle notification à la séquence de notifications répétée sur le canal NCH ; et
- on modifie (11) le paramètre NLN, de façon à indiquer qu'une nouvelle notification est ajoutée à la séquence.

Dans l'art antérieur, le procédé de lecture par une station mobile en mode veille d'une notification (normale ou urgente) comprend les étapes suivantes (cf fig.2) :
- la station mobile lit (20) un message du canal PCH, et notamment le paramètre NLN ;
- elle compare (21) le paramètre NLN (noté NLNₜ₊ᵢ) lu avec un paramètre NLN préalablement stocké (noté NLNₜ);
- si les deux paramètres NLNₜ₊₁ et NLNₜ sont égaux, elle attend le prochain message du canal PCH (on reboucle sur l'étape référencée 20) ;
- si les deux paramètres NLNₜ₊₁ et NLNₜ ne sont pas égaux, elle écoute (22) le canal NCH et lit les notifications une par une, jusqu'à ce que toutes les notifications aient été lues. (on détecte donc (23) cette dernière condition) ;
- lorsque toutes les notifications ont été lues, elle stocke (24) le nouveau paramètre NLNₜ₊₁ à la place de l'ancien NLNₜ, puis reprend l'écoute du canal PCH (on reboucle sur l'étape référencée 20).

Le procédé selon l'invention de diffusion d'une notification urgente comprend les étapes suivantes (cf fig.3) :
- on envoie (30) la notification urgente (une ou plusieurs fois), sous forme de message, directement sur le canal PCH ;
- on ajoute (31) la nouvelle notification à la séquence de notifications répétée sur le canal NCH ; et
- on modifie (32) le paramètre NLN, de façon à indiquer qu'une nouvelle notification est ajoutée à la séquence.

On notera que les étapes référencées 31 et 32, qui sont identiques aux étapes référencées 10 et 11 du procédé de l'art antérieur, sont optionnelles. Elles visent uniquement à permettre l'accès à la notification urgente à des stations mobiles passées en mode veille après que la notification urgente a été émise sous forme de message sur le canal PCH. On rappelle que dans ce cas, l'accès à la notification urgente se fait selon la technique de l'art antérieur, donc relativement lentement. Afin d'éviter cet inconvénient, on peut prévoir de répéter plusieurs fois l'étape référencée 30. En d'autres termes, on envoie alors à plusieurs reprises la notification urgente, sous forme de message, directement sur le canal PCH.

Le procédé selon l'invention de lecture par une station mobile en mode veille d'une notification urgente comprend l'unique étape suivante (cf fig.4) :
- la station mobile, qui écoute le canal PCH, lit immédiatement (40) la notification urgente qui lui parvient sur ce canal PCH sous forme de message.

Il est clair que le procédé de l'invention ne concerne que l'envoi et la lecture d'une notification urgente. Par conséquent, une notification normale (c'est-à-dire non urgente), est envoyée et lue selon les procédés de l'art antérieur, tels que décrits ci-dessus en relation avec les figures 1 et 2 respectivement.

## Revendications

1. Procédé de diffusion d'une notification urgente à destination d'une pluralité de stations mobiles en mode veille, dans un système de radiocommunication du type mettant en oeuvre notamment :
- un canal de messagerie (PCH), permettant la diffusion de messages vers ladite pluralité de stations mobiles, et
- un canal de notification (NCH), permettant la diffusion de notifications vers ladite pluralité de stations mobiles,
chaque station mobile écoutant des messages successifs sur le canal de messagerie et passant à l'écoute du canal de notification lorsqu'elle sait qu'une nouvelle notification est émise sur le canal de notification, chaque message comprenant notamment, à cet effet, une indication de l'arrivée d'une nouvelle notification sur ledit canal de notification,
caractérisé en ce que ladite notification urgente est envoyée (30) au moins une fois, sous forme de message, directement sur ledit canal de messagerie, de façon que le message suivant reçu par chaque station mobile soit ladite notification urgente.

2. Procédé selon la revendication 1, ledit canal de messagerie disposant d'un nombre prédéterminé de blocs de "paging" parmi la totalité des blocs de "paging" de la voie descendante d'une multitrame BCCH/CCCH,
caractérisé en ce que ladite notification urgente est envoyée (30), sous forme de message, directement dans chacun desdits blocs de "paging" dont dispose ledit canal de messagerie.

3. Procédé selon l'une quelconque des revendications 1 et 2, caractérisé en ce que ladite notification urgente est également envoyée sur ledit canal de notification (NCH).

4. Procédé selon l'une quelconque des revendications 1 à 3, caractérisé en ce que ledit système de radiocommunication est un système de radiocommunication numérique cellulaire de type GSM.
